# EUROPEAN PATENT SPECIFICATION

(11) **EP 1 154 619 B1**
(45) Date of publication and mention of the grant of the patent: **23.02.2005**
(21) Application number: 00109816.9
(22) Date of filing: 09.05.2000
(51) Int. Cl.: H04M 1/247

(54) **Portable communication device with a displayed, double used status line**
Tragbares Kommunikationsgerät mit angezeigter, doppelgenutzter Zustandszeile
Dispositif portable de transmission affichant un ligne d'état, doublement utilisé

(43) Date of publication of application: 14.11.2001
(73) Proprietor: Sony International (Europe) GmbH, 10785 Berlin (DE)
(72) Inventor: Badtke, Rainer, c/o Sony International Europe gmbH, 85609 Aschheim (DE)
(74) Representative: Körber, Martin, Dipl.-Phys.

(56) References cited:
- EP-A- 0 860 972
- US-A- 5 923 737

## Description

The present invention relates to a portable communication device for a wireless communication system with a display means for displaying information and a method for displaying status information of a portable communication device.

The displays of portable communication devices like mobile telephones in GSM (Global System for Mobile communication) or UMTS (Universal Mobile Telephone System) are limited in space for displaying information, like e.g. status information. These status information could be information about field strength, battery level, key lock, call-in progress, roaming, alarm activated, SMS-received, E-mail-received, fax-received, home-zone active, voice-mail received and so on and are often visualised by icons. Usually, these icons are displayed in a status line at the top of the display.

A different approach is presented in US 5 923 737, which uses an area of the display below the status line to provide a user of a communication device with a pictorial representation of each state of a call linked to the device in an office-like graphical scenery. Each individual call is represented by a figurine, the appearance and/or position of which is changed when the call enters a different status like e.g. being put on hold or accepted. Although the system provides an easy to comprehend graphical status information about a number of calls to be taken care of simultaneously, it consumes a lot of space that is usually not available on the small display of a portable communication device for a wireless communication system. The display further provides a bar at the bottom of the display, which comprises a number of icons relating to functions of the terminal.

However, there is often more information available than there is space in the display caused by increasing services provided by the network provider and functionality of communication devices.

To reduce this problem e.g. JP 0070131856 suggests to display the received electric field level and the residual capacity of battery compactly in an easy-to-see state at the display part of a mobile station.

The object of the present invention is therefore to provide a portable communication device for a wireless communication system with a display means for displaying information and a method for displaying status information of a portable communication device, which allows to display a large number of icons of status information in a status line.

This object is achieved by the invention as defined in the independent claims. Further developments are set forth in the dependent claims.

The above object is achieved by a portable communication device for a wireless communication system according to claim 1, with a display means for displaying information, comprising a status line for displaying icons visualising status information, which is characterised in that at least in a part of the status line a first or a second group of icons is selectively displayed upon the occurrence of a predetermined event, whereby one of said group of icons is displayed while the other of said group is invisible.

The above object is further achieved by a method for displaying status information of a portable communication device for a wireless communication system, whereby a status line with icons visualising status information is displayed, which is characterised in that at least in a part of the status line a first or a second group of icons is selectively displayed upon the occurrence of a predetermined event, whereby one of said group of icons is displayed while the other of said group of icons is invisible.

According to the present invention, one group of icons is displayed in the status line while the other group of icons is invisible in the background. The displayed group of icons is swapped by a special event occurring.

Thus, the limited space of a display, e.g. a LCD-display, of portable communication devices for a wireless communication can be used more effective, so the present invention provides an easy way of having a lot of information displayed on very little space.

The swapping between the different displayed groups of icons can happen on the occurrence of different events:

In one embodiment of the present invention the predetermined event is a predetermined time delay. That means, that the group of icons, which is actually displayed, changes e.g. every second.

In another embodiment of the present invention, the predetermined event is an input via an inputting means of the portable communication device. This could be pressing of a key or a combination of keys, e.g. "*1" for displaying the first group of icons and "*2" for displaying the second group of icons.

In this embodiment it could be advantageous if the second group of icons is displayed only during a predetermined time period (e.g. two seconds) after which the first group of icons is displayed again. So, icons visualising status information with higher priority are always displayed in the foreground while icons visualising status information with lower priority are only displayed by an input via the inputting means.

Further, advantageously an indicating symbol is displayed upon the change of a status information of the actually invisible group of icons, so that the user will be informed about a changing of one of this status information.

In a third embodiment of the present invention the predetermined event is the change of a status information of the actually visible group of icons, so that always the group of icons is displayed, which contains a changed status information.

According to the present invention, there can be a special icon (indicating symbol) which is displayed always at the same position, e.g. top left corner, indicating which of the different groups of icons (first or second group of icons) existing is currently displayed. This icon is a so-called level-icon. This level-icon could e.g. also start flashing upon the change of a status information of the actually invisible group of icons. For example, if an icon, which is displayed for a received SMS-message, would be displayed normally in the second group of icons but the first group of icons is displayed while a SMS is received, the level-icon could start flashing to indicate to the user that there is a change in a status information (SMS received) contained in the background icon group (second group of icons).

The status line is displayed along a border of the display. Usually, the status line is displayed at the top of the display of a portable communication device for a wireless communication system, but it can also be displayed e.g. at the bottom or vertically at the left or right border of the display.

Advantageously, the user of the portable communication device has the capability to chose from a menu which icons are displayed in the first group of icons and which icons are displayed in the second group of icons.

The selective display of different groups of icons according to the present invention is also possible for more than two groups of icons.

In the following description, a preferred embodiment of the present invention is explained in more detail in relation to the enclosed drawings, in which
figure 1 shows a schematic top view of a portable communication device for a wireless communication system according to the present invention,
figure 2a, 2b shows an example for a display comprising a status line displaying several groups of icons, and
figure 3 shows a block diagram of a portable communication device according to the present invention.

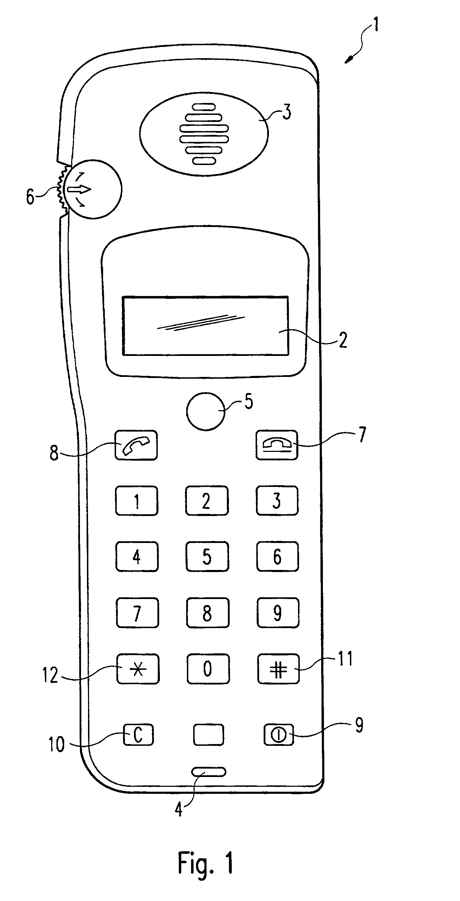

Figure 1 shows a schematic top view of a portable telephone 1 (portable communication device) for a wireless telecommunication system as e.g. the GSM or UMTS system. Although the following description solely relates to a portable telephone, the present invention could also be realised in any portable devices with limited display space for displaying any kind of status information, like portable palmtop-computers, etc.

The portable telephone 1 shown in figure 1 comprises a display means 2, on which pieces of information like characters, menu items, text information, a status line with icons visualising status information or the like can be displayed. The portable telephone 1 further comprises a loudspeaker 3 on the upper front part and a microphone 4 on the lower front part of the casing. Further, an enter or menu key 5 as enter means for selecting a respective menu item or function is provided. The portable telephone 1 further comprises the usual 10 alphanumeric keys (numbers 0 to 9), a communication start key 8, a communication end key 7, a pound key 11, a star key 12, a power-on/off key 9 and a clear key 10. The portable telephone 1 also comprises optional a jogdial 6, which is a rotable key, a part of which is exposed to the outside. The exposed part can be touched by the finger of a user's hand and may be rotated clockwise or counterclockwise to scroll through pieces of information displayed on the display means 2. The display means 2 of the portable telephone 1 comprises a graphical display, which has a higher resolution than usual text or character displays.

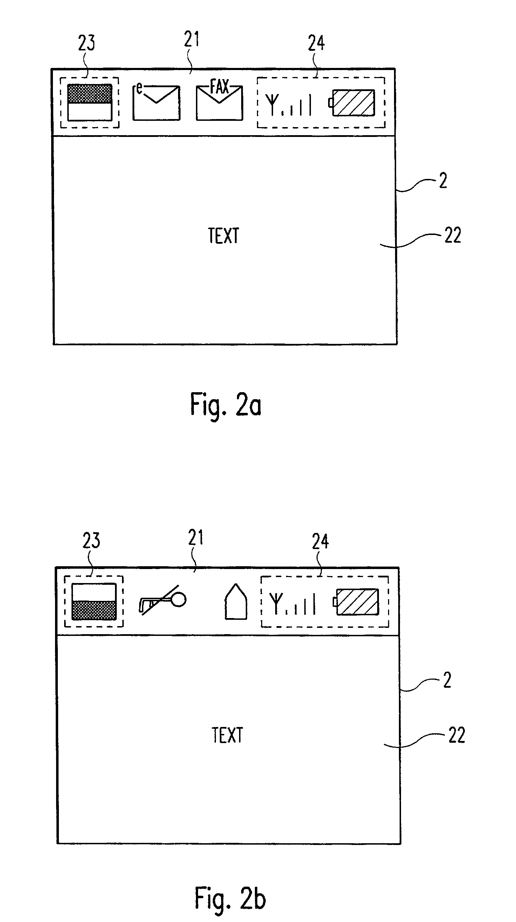

Figures 2a and 2b show an example for the display 2 of the portable telephone 1 comprising a status area 21 for displaying a status line and a text area 22 for displaying text, e.g. received messages, whereby figure 2a shows an example for displaying a first group of icons visualising status information and figure 2b shows an example for displaying a second group of icons visualising status information.

In the example of figures 2a and 2b are status information about field strength and battery level 24 and a symbol 23 (so-called level-icon) indicating which group of icons (first group or second group) is shown always displayed; the level-icon 23 could additionally start flashing upon changing of a status information of the invisible group of icons.

The first group of icons contains e.g. icons indicating received E-mails and faxes as shown in figure 2a, the second group of icons contains e.g. icons indicating key-lock active and home-zone active.

According to the present invention, at least in a part of the status line 21 the first or the second group of icons is selectively displayed upon the occurrence of a predetermined event, whereby one of said groups of icons is displayed in the foreground while the other of said groups of icons is invisible in the background. By inputting a special command via the inputting means, e.g., the user could switch the actual invisible group of icons to the foreground, while the actual visible group of icons is swapped invisible in the background. This special command could be, e.g., "*1" for displaying the first group of icons and "*2" for displaying the second group of icons input by the inputting keys.

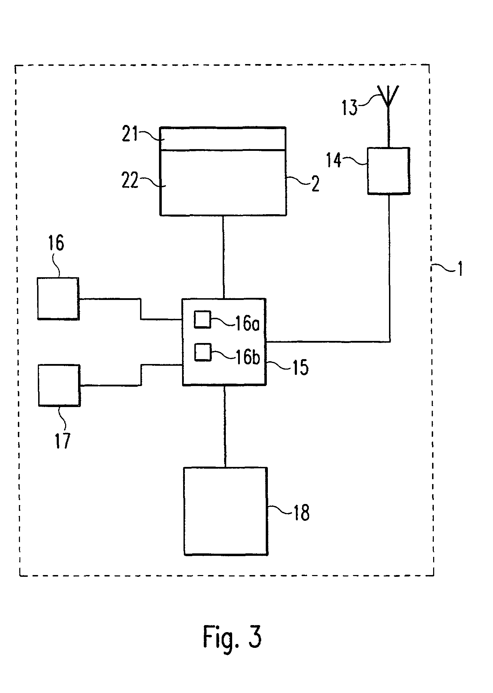

In figure 3, a simple block diagram of the portable communication device for a wireless communication system according to the present invention, as e.g. a portable telephone 1, is shown.

The portable telephone 1 (portable communication device) according to the present invention comprises an antenna 13 connected to a transmitting and receiving means 14 for communicating with other communication devices and/or base stations of the wireless communication system over an Air-interface. The portable telephone further comprises inputting means 18, like the alphanumeric and function keys (see also figure 1), memory means 16 for storing e.g. program information, the display means 2 comprising the status area for displaying the status line 21 and the text area 22 for displaying text information, a clock means 17 working as timebase (e.g. to determine a time delay) for the portable communication means. The operation of the portable communication device is controlled by a processing means 15.

Advantageously, the means, which are necessary for displaying the first and second groups of icons and for detecting a predetermined event according to the present invention are realized as program information (software) stored in the memory means 16. This software is used by the processing means 15 for controlling the operation of the portable communication device 1.

In detail, after detecting the predetermined event by means for detecting a predetermined event 16a, the actually displayed group of icons and the actually invisible group of icons is swapped by means for changing the visible group of icons 16b according to the present invention.

The predetermined event can be a predetermined time delay, which is detected by the means for detecting a predetermined event 16a on the basis of an elapsed time counted by the clock means 17. The predetermined event can also be a predetermined input by the inputting means 18 or a change of a status information of the actually invisible group of icons.

It is to be noted, that the portable communication device schematically shown in figure 3 further comprises a plurality of elements necessary for its operation in a wireless communication system, as e.g. coding/decoding means, modulating/ demodulating means and the like as well as further means realized as software for controlling the portable communication device by the processing means 15.

## Claims

1. Portable communication device (1) for a wireless communication system with a display means (2) for displaying information, the display means (2) comprising a status line (21) for displaying icons that visualise status information,
**characterised in**
**that** a first or a second group of icons is selectively displayed in at least a part of the status line (21) upon the occurrence of a predetermined event, whereby one of said group of icons is displayed while the other of said group of icons is invisible, and a user can choose from a menu of the portable communication device (1) which icons are displayed in the first group of icons and which icons are displayed in the second group of icons.

2. Portable communication device (1) according to claim 1,
**characterised in**
**that** the predetermined event is a predetermined time delay.

3. Portable communication device (1) according to claim 1,
**characterised in**
**that** the predetermined event is an input via an inputting means (18) of the portable communication device (1) .

4. Portable communication device (1) according to claim 3,
**characterised in**
**that** the second group of icons is displayed only during a predetermined time period after which the first group of icons is displayed again.

5. Portable communication device (1) according to claim 3 or 4,
**characterised in**
**that** an indicating symbol is displayed upon the change of a status information of the actually invisible group of icons.

6. Portable communication device (1) according to one of the claims 1 to 3,
**characterised in**
**that** the predetermined event is the change of a status information of the actually invisible group of icons.

7. Portable communication device (1) according to one of the claims 1 to 6,
**characterised by**
a displayed symbol (23) indicating which group of icons is shown.

8. Portable communication device (1) according to one of the claims 1 to 7,
**characterised in**
**that** the status line (21) is displayed along a border of the display (2).

9. Method for displaying status information of a portable communication device (1) for a wireless communication system, whereby a status line (21) with icons that visualise status information is displayed,
**characterised in**
**that** a first or a second group of icons is selectively displayed in at least a part of the status line (21) upon the occurrence of a predetermined event, whereby one of said group of icons is displayed while the other of said group of icons is invisible, and a user can choose from a menu which icons are displayed in the first group of icons and which icons are displayed in the second group of icons.

10. Method according to claim 9,
**characterised in**
**that** the predetermined event is a predetermined time delay.

11. Method according to claim 9,
**characterised in**
**that** the predetermined event is an input via an inputting means (18).

12. Method according to claim 11,
**characterised in**
**that** the second group of icons is displayed only during a predetermined time period after which the first group of icons is displayed again.

13. Method according to claim 11 or 12,
**characterised in**
**that** the change of a status information of the actually invisible group of icons is displayed.

14. Method according to one of the claims 9 to 11,
**characterised in**
**that** the predetermined event is the change of a status information of the actually invisible group of icons.

15. Method according to one of the claims 9 to 14,
**characterised by**
a displayed symbol (23) indicating which group of icons is shown.

## Patentansprüche

1. Tragbares Kommunikationsgerät (1) für ein drahtloses Kommunikationssystem mit einer Anzeigeeinrichtung (2) für die Anzeige von Informationen, wobei die Anzeigeeinrichtung (2) eine Statuszeile (21) aufweist für die Anzeige von Icons, die Statusinformationen visualisieren,
**dadurch gekennzeichnet,**
**daß** beim Eintreten eines vorbestimmten Ereignisses in zumindest einem Teil der Statuszeile (21) selektiv eine erste oder eine zweite Gruppe von Icons angezeigt wird. wobei eine der Gruppen von Icons angezeigt wird, während die andere Gruppe von Icons unsichtbar ist, und wobei ein Benutzer aus einem Menü des tragbaren Kommunikationsgeräts (1) auswählen kann, welche Icons in der ersten Gruppe von Icons angezeigt werden und welche Icons in der zweiten Gruppe von Icons angezeigt werden.

2. Tragbares Kommunikationsgerät (1) nach Anspruch 1,
**dadurch gekennzeichnet,**
**daß** das vorbestimmte Ereignis eine vorbestimmte Zeitverzögerung ist.

3. Tragbares Kommunikationsgerät (1) nach Anspruch 1,
**dadurch gekennzeichnet,**
**daß** das vorbestimmte Ereignis eine Eingabe über eine Eingabeeinrichtung (18) des tragbaren Kommunikationsgerät (1) ist.

4. Tragbares Kommunikationsgerät (1) nach Anspruch 3,
**dadurch gekennzeichnet,**
**daß** die zweite Gruppe von Icons nur während einer vorbestimmten Zeitperiode angezeigt wird, nach deren Ablauf wieder die erste Gruppe von Icons angezeigt wird.

5. Tragbares Kommunikationsgerät (1) nach Anspruch 3 oder 4,
**dadurch gekennzeichnet,**
**daß** bei einer Änderung einer Statusinformation der momentan unsichtbaren Gruppe von Icons ein Hinweissymbol angezeigt wird.

6. Tragbares Kommunikationsgerät (1) nach einem der Ansprüche 1 bis 3,
**dadurch gekennzeichnet,**
**daß** das vorbestimmte Ereignis eine Änderung einer Statusinformation der momentan unsichtbaren Gruppe von Icons ist.

7. Tragbares Kommunikationsgerät (1) nach einem der Ansprüche 1 bis 6,
**dadurch gekennzeichnet,**
**daß** ein angezeigtes Symbol (23) angibt, welche Gruppe von Icons dargestellt wird.

8. Tragbares Kommunikationsgerät (1) nach einem der Ansprüche 1 bis 7,
**dadurch gekennzeichnet,**
**daß** die Statuszeile (21) entlang eines Randes des Displays angezeigt wird.

9. Verfahren zum Anzeigen einer Statusinformation eines tragbaren Kommunikationsgeräts (1) für ein drahtloses Kommunikationssystem, wobei eine Statuszeile (21) mit Icons angezeigt wird, die eine Statusinformation visualisieren,
**dadurch gekennzeichnet,**
**daß** beim Eintreten eines vorbestimmten Ereignisses in zumindest einem Teil der Statuszeile (21) selektiv eine erste oder eine zweite Gruppe von Icons angezeigt wird. wobei eine der Gruppen von Icons angezeigt wird, während die andere Gruppe von Icons unsichtbar ist, und wobei ein Benutzer aus einem Menü auswählen kann, welche Icons in der ersten Gruppe von Icons angezeigt werden und welche Icons in der zweiten Gruppe von Icons angezeigt werden.

10. Verfahren nach Anspruch 9,
**dadurch gekennzeichnet,**
**daß** das vorbestimmte Ereignis eine vorbestimmte Zeitverzögerung ist.

11. Verfahren nach Anspruch 9,
**dadurch gekennzeichnet,**
**daß** das vorbestimmte Ereignis eine Eingabe über eine Eingabeeinrichtung (18) ist.

12. Verfahren nach Anspruch 11,
**dadurch gekennzeichnet,**
**daß** die zweite Gruppe von Icons nur während einer vorbestimmten Zeitperiode angezeigt wird, nach deren Ablauf wieder die erste Gruppe von Icons angezeigt wird.

13. Verfahren nach Anspruch 11 oder 12,
**dadurch gekennzeichnet,**
**daß** eine Änderung einer Statusinformation der momentan unsichtbaren Gruppe von Icons angezeigt wird.

14. Verfahren nach einem der Ansprüche 9 bis 11,
**dadurch gekennzeichnet,**
**daß** das vorbestimmte Ereignis eine Änderung einer Statusinformation der momentan unsichtbaren Gruppe von Icons ist.

15. Verfahren nach einem der Ansprüche 9 bis 14,
**dadurch gekennzeichnet,**
**daß** ein angezeigtes Symbol (23) angibt, welche Gruppe von Icons dargestellt wird.

## Revendications

1. Dispositif de communication portable (1) pour un système de communication sans fil, comprenant un moyen d'affichage (2) pour afficher des informations, le moyen d'affichage (2) comprenant une ligne d'état (21) pour afficher des icônes qui visualisent les informations d'état,
**caractérisé en ce qu'**un premier ou un second groupe d'icônes est affiché d'une façon sélective dans au moins une partie de la ligne d'état (21) lors de la survenance d'un événement prédéterminé, moyennant quoi un desdits groupes d'icônes est affiché pendant que l'autre desdits groupes d'icônes est invisible, un utilisateur pouvant choisir dans un menu du dispositif de communication portable (1) les icônes qui sont affichées dans le premier groupe d'icônes ainsi que les icônes qui sont affichées dans le second groupe d'icônes.

2. Dispositif de communication portable (1) selon la revendication 1, **caractérisé en ce que** l'événement prédéterminé est un temps de retard prédéterminé.

3. Dispositif de communication portable (1) selon la revendication 1, **caractérisé en ce que** l'événement prédéterminé est une entrée via un moyen d'entrée (18) du dispositif de communication portable (1).

4. Dispositif de communication portable (1) selon la revendication 3, **caractérisé en ce que** le second groupe d'icônes est affiché uniquement pendant une période de temps prédéterminée, au terme de laquelle le premier groupe d'icônes est affiché à nouveau.

5. Dispositif de communication portable (1) selon la revendication 3 ou 4, **caractérisé en ce qu'**un symbole d'indication est affiché lors du changement d'une information d'état du groupe d'icônes effectivement invisible.

6. Dispositif de communication portable (1) selon l'une des revendications 1 à 3, **caractérisé en ce que** l'événement prédéterminé est le changement d'une information d'état du groupe d'icônes effectivement invisible.

7. Dispositif de communication portable (1) selon l'une des revendications 1 à 6, **caractérisé par** un symbole affiché (23) indiquant quel groupe d'icônes est affiché.

8. Dispositif de communication portable (1) selon l'une des revendications 1 à 7, **caractérisé en ce que** la ligne d'état (21) est affichée le long d'un bord de l'affichage (2).

9. Procédé pour afficher des informations d'état d'un dispositif de communication portable (1) pour un système de communication sans fil, moyennant quoi on affiche une ligne d'état (21) comportant des icônes qui visualisent les informations d'état, **caractérisé en ce qu'**un premier ou un second groupe d'icônes est affiché d'une façon sélective dans au moins une partie de la ligne d'état (21) lors de la survenance d'un événement prédéterminé, moyennant quoi un desdits groupes d'icônes est affiché pendant que l'autre desdits groupes d'icônes est invisible, un utilisateur pouvant choisir dans un menu les icônes qui sont affichées dans le premier groupe d'icônes ainsi que les icônes qui sont affichées dans le second groupe d'icônes.

10. Procédé selon la revendication 9, **caractérisé en ce que** l'événement prédéterminé est un temps de retard prédéterminé.

11. Procédé selon la revendication 9, **caractérisé en ce que** l'événement prédéterminé est une entrée via un moyen d'entrée (18).

12. Procédé selon la revendication 11, **caractérisé en ce que** le second groupe d'icônes est affiché uniquement pendant une période de temps prédéterminée, au terme de laquelle le premier groupe d'icônes est affiché à nouveau.

13. Procédé selon la revendication 11 ou 12, **caractérisé en ce que** le changement d'une information d'état du groupe d'icônes effectivement invisible est affiché.

14. Procédé selon l'une des revendications 9 à 11, **caractérisé en ce que** l'événement prédéterminé est le changement d'une information d'état du groupe d'icônes effectivement invisible.

15. Procédé selon l'une des revendications 9 à 14, **caractérisé par** un symbole affiché (23) indiquant quel groupe d'icônes est affiché.
